# EUROPÄISCHE PATENTSCHRIFT

(11) **EP 0 459 173 B1**
(45) Veröffentlichungstag und Bekanntmachung des Hinweises auf die Patenterteilung: **04.01.1995**
(21) Anmeldenummer: 91107152.0
(22) Anmeldetag: 03.05.1991
(51) Int. Cl.: B60N 2/00

(54) **Vorrichtung zur Verbindung eines Fahrzeugsitzes mit Bodenteilen eines Fahrzeugs**
Apparatus for connecting a vehicle seat to floor elements of a vehicle
Dispositif pour connecter un siège de véhicule à des éléments de sol d'un véhicule

(30) Priorität: 01.06.1990 DE 4017706
(43) Veröffentlichungstag der Anmeldung: 04.12.1991
(73) Patentinhaber: AUDI AG, 85045 Ingolstadt (DE)
(72) Erfinder: Adickes, Henning, W-8070 Ingolstat (DE); Wallmann, Uwe, W-8071 Grossmehring (DE)
(74) Vertreter: Engelhardt, Harald

(56) Entgegenhaltungen:
- EP-A- 0 181 499
- EP-A- 0 242 859
- EP-A- 0 394 892
- DE-A- 3 918 424

## Beschreibung

Die Erfindung betrifft eine Vorrichtung zur Verbindung eines Fahrzeugsitzes mit Bodenteilen eines Fahrzeugs nach dem Oberbegriff des Anspruchs 1.

Die Verbindung eines Fahrzeugsitzes mit dem Fahrzeugboden wird in allgemein bekannter Art über eine Sitzschienenanordnung vorgenommen. Dazu ist eine in Fahrzeuglängsrichtung verlaufende Außenschiene als erste Profilschiene mit dem Fahrzeugboden fest verbunden. Am Fahrzeugsitz ist eine Innenschiene als zweite Profilschiene befestigt, wobei Außen- und Innenschiene ineinander eingreifen und ein hinterschnittenes Profil bilden. Dadurch sind die Außenschiene und Innenschiene über einen Formschluß in Fahrzeugslängsrichtung für eine Längsverstellung des Fahrzeugsitzes verschiebbar verbunden. Eine Längsarretierung erfolgt üblicherweise über eine längs verlaufende Zahnschiene mit einer Riegelanordnung.

Wegen des Formschlusses und der Hinterschneidung an den Profilen der Außenschiene und Innenschiene muß bei der Montage der Fahrzeugsitz mit den Enden der im Abstand angeordneten, beiden Innenschienen über die Enden der Außenschienen von einer Stirnseite her geschoben werden. Dies ist eine ziemlich aufwendige und umständliche Tätigkeit, da der Fahrzeugsitz relativ schwer ist und die Schienen genau ineinandergebracht werden müssen, wobei die Sicht auf diesen Bereich üblicherweise behindert ist. Dies kennt auch jeder Autofahrer, der die Vordersitze, beispielsweise zu Reinigungszwecken, selbst aus dem Fahrzeug genommen und wieder eingesetzt hat. Eine Montage durch eine Verschiebung an Schienen in waagrechter Richtung entspricht nicht der allgemein bevorzugten Montagerichtung von oben her in vertikaler Richtung.

Die Fahrzeugsitze und ihre Längseinstellung haben auch Auswirkungen auf die Sicherheit der Fahrzeuge, insbesondere auf Rückhaltesysteme mit Sicherheitsgurten. Üblicherweise sind die Sicherheitsgurte an stabilen Trägern am Mitteltunnel und an den Türpfosten bzw. Türschwellern befestigt. Je nach der Längseinstellung des Sitzes ändert sich somit der Verlauf der Sicherheitsgurte, da deren Abstützpunkte ortsfest liegen. Insbesondere in Extremstellungen des Fahrzeugsitzes kann die Gurtgeometrie ungünstig werden und die Funktion des Sicherheitsgurts ungünstig beeinflußt werden.

Um hier eine Verbesserung zu schaffen, ist es bereits allgemein bekannt, die Sicherheitsgurte direkt an den Fahrzeugsitzen anzuordnen, so daß deren Anlenkpunkte bei einer Sitzverstellung mitbewegt werden. Bei solchen, als Gurtintegralsitze bezeichneten Fahrzeugsitzen, besteht das Problem, daß bei einem Aufprall, wenn das Rückhaltesystem in Funktion tritt, die Rückhaltekräfte über die Sitzschienen in die Bodengruppe geleitet werden müssen. Da die hierbei auftretenden Kräfte sehr groß sein können (bis ca. 40 Tonnen), sind diese mit üblichen Sitzschienenanordnungen, ohne daß der Fahrzeugsitz ausreißt, nicht zu bewältigen. Obwohl die Hauptbelastungsrichtung bei einem Aufprall in Fahrzeuglängsrichtung liegt, wird auch ein erhebliches Kippmoment auf den Fahrzeugsitz ausgeübt, da eine Gurtabstützstelle an der Lehnenoberseite liegt. Mit den bekannten, punktuellen, einfachen Schraubverbindungen ist die Kräfteableitung, insbesondere die Ableitung der Kippmomente in die Bodengruppe, praktisch kaum zu bewältigen.

Es ist weiter eine Vorrichtung zur Verbindung eines Fahrzeugsitzes mit Bodenteilen eines Fahrzeugs nach dem Oberbegriff des Anspruchs 1 bekannt (EP-A-0 242 859), mit einer in Fahrzeuglängsrichtung verlaufenden Außenschiene als erste Profilschiene, die mit den Bodenteilen fest verbunden ist und mit einer am Fahrzeugsitz befestigten Innenschiene als zweite Profilschiene, wobei die Außenschiene und Innenschiene ein hinterschnittenes Profil bilden und die Außenschiene mit der Innenschiene über einen Formschluß verschiebbar verbunden ist. Dabei ist an den Bodenteilen ein nach oben offenes, in Fahrzeuglängsrichtung verlaufendes U-Profil mit zur Profilmitte abgebogenen, oberen Längsrändern angebracht, so daß sich ein hinterschnittenes Profil bestimmter Öffnungsbreite ergibt. Weiter sind an der Außenschiene seitlich abstehende Längsstege vorgesehen und die Außenschiene ist in Axialrichtung an den Bodenteilen gesichert.

Das U-Profil zur Befestigung der Außenschiene an den Bodenteilen besteht hier aus im Abstand mit Schrauben befestigten Druckstücken, die die seitlich abstehenden Längsstege an der Außenschiene für eine Befestigung übergreifen. Die Montage der Außenschiene am Fahrzeugboden dürfte hier nur in Verbindung mit der Innenschiene und damit im voll montierten Zustand mit dem Fahrzeugsitz möglich sein. Durch die beengten Platzverhältnisse im Bereich der Schienen unter dem Fahrzeugsitz ist die Montage über Schraubverbindungen aufwendig und beschwerlich. Ebenso ist eine Demontage zur Herausnahme eines Fahrzeugsitzes aus dem Fahrzeug nur durch Lösen der Verschraubungen möglich und damit ebenso aufwendig und beschwerlich.

In einer ähnlichen, bekannten Anordnung (EP-A-0 181 499) wird die Außenschiene über Schraubverbindungen direkt mit dem Fahrzeugboden verbunden, so daß die vorstehenden Ausführungen im wesentlichen auch hier zutreffen.

Aufgabe der Erfindung ist es demgegenüber, eine gattungsgemäße Vorrichtung zur Verbindung eines Fahrzeugsitzes mit Bodenteilen eines Fahrzeugs so weiterzubilden, daß die Montage vereinfacht wird und eine Verbindung geschaffen wird, die große Kräfte aufnehmen kann.

Diese Aufgabe wird mit den kennzeichnenden Merkmalen des Anspruchs 1 gelöst.

Gemäß Anspruch 1 ist die Außenschiene mit ihrer Breite in das U-Profil von oben her einsetzbar. Bei in das U-Profil eingesetzter Außenschiene sind von der Stirnseite her in den zwischen U-Profil und Außenschiene verbleibenden Raum Verbindungselemente formschlüssig einschiebbar. Diese untergreifen einerseits die oberen Längsränder des U-Profils und übergreifen andererseits die Längsstege der Außenschiene.

Mit der erfindungsgemäßen Anordnung wird erreicht, daß ein Fahrzeugsitz auf einfache Weise von oben her an seinem Bestimmungsort in die bereits am Fahrzeugboden vormontierten U-Profile eingesetzt werden kann. Die Außenschiene wird erfindungsgemäß bereits vor der Sitzmontage über die Innenschiene am Fahrzeugsitz gesteckt und die gesamte Anordnung in das U-Profil an der Bodengruppe von oben her eingesetzt und durch die stirnseitig einfach einschiebbaren Verbindungselemente gesichert.

Über die Verbindungselemente wird eine formschlüssige Verbindung zu der Bodengruppe hergestellt, die bei entsprechend langer Dimensionierung der Verbindungselemente einen großen Bereich umfaßt und somit für eine große Kraftübertragung geeignet ist. Die Kraftableitung in die Bodengruppe bei Gurtintegralsitzen ist mit einer solchen Anordnung und Befestigung gut zu bewältigen.

Grundsätzlich ist auch die fertigungstechnisch zwar ungünstigere, aber geometrisch äquivalente Lösung in der Weise möglich, daß die Unterseite der Außenschiene als U-Profil ausgeführt ist, das über eine T-Schiene mit Längsstegen an der Bodengruppe gesetzt werden und mit Verbindungselementen gesichert werden kann.

Nach Anspruch 2 wird die Sitzverbindung bevorzugt zu Querträgern der Bodengruppe hergestellt.

Der beidseitig verbleibende Zwischenraum zwischen dem U-Profil der Bodengruppe und der Außenschiene wird zweckmäßig so dimensioniert, daß die Verbindungselemente nach Anspruch 3 im Querschnitt Z-förmige Längsprofile sind.

Die beiden im Abstand verlaufenden Längsprofile werden nach Anspruch 4 zweckmäßig durch einen Quersteg an der Stirnseite verbunden, so daß damit ein einziges Teil erhalten wird, das in einem Arbeitsgang eingesteckt werden kann.

Nach Anspruch 5 ist die Außenschiene an den Endseiten mit bodenseitigen Anschlußteilen, bevorzugt einer vorstehenden Auflageplatte, versehen, über die die Außenschiene mit einer Schraubverbindung an den Bodenteilen befestigt und damit in axialer Richtung gesichert ist. Die Abstützung in vertikaler Richtung erfolgt durch den Formschluß in den Schienen, so daß die Schraubverbindung nur in Querrichtung auf Scherung belastet ist, so daß sie sehr große Kräfte aufnehmen kann. Bei einer Integralsitzanordnung werden somit die Kippmomente im wesentlichen vom Formschluß in den Schienen aufgenommen und die axialen Kräfte in Fahrzeuglängsrichtung durch die Schraubverbindung abgestützt.

Die Verbindungselemente sind gegen ein Herausrutschen zu sichern, da bei herausgerutschten Verbindungselementen der Fahrzeugsitz plötzlich freikommen würde. Eine einfach und schnell durchführbare Maßnahme besteht nach Anspruch 6 darin, den Quersteg der Verbindungselemente mit derselben Schraubverbindung in Axialrichtung festzulegen, wie sie zur Sicherung der Außenschiene verwendet ist.

In der Außenschiene ist nach Anspruch 7 ein Längskanal enthalten, in den die Innenschiene mit einem Formteil in der Weise eingreift, daß Führungsbahnen für eine Kugellagerung gebildet sind. Damit wird eine stabile Ausführung der Außenschiene erreicht und zugleich über die Kugellagerung eine leichtgängige Sitzverstellung erhalten. Nach Anspruch 8 werden zweckmäßig drei Kugellagerführungen verwendet.

Durch die mit Anspruch 9 vorgeschlagenen Längsleisten wird mit zwei profilförmigen Formschlüssen eine Sicherung gegen ein vertikales Abheben geschaffen. Zudem wirken die Längsleisten als Verstärkungsrippen und geben der gesamten Schienenanordnung, insbesondere auch in Fahrzeugquerrichtung, eine erhöhte Stabilität.

Die erfindungsgemäße Schienenanordnung wird zweckmäßig an den Stirnseiten durch eine Abdeckkappe abgedeckt. Diese kann in bekannter Weise als aufklipsbares Kunststoffteil ausgeführt sein, oder, wie mit Anspruch 10 vorgeschlagen, bereits einstückig mit den Verbindungselementen bzw. dem Quersteg verbunden sein.

Anhand der Zeichnung wird ein Ausführungsbeispiel der Erfindung mit weiteren Merkmalen, Einzelheiten und Vorteilen näher erläutert.

Es zeigen
- Fig. 1: einen Querschnitt durch eine Vorrichtung zur Verbindung eines Fahrzeugsitzes mit Bodenteilen eines Fahrzeugs,
- Fig. 2: eine Seitenansicht der Vorrichtung nach Fig. 1 und
- Fig. 3: eine Draufsicht auf die Vorrichtung nach Fig. 1.

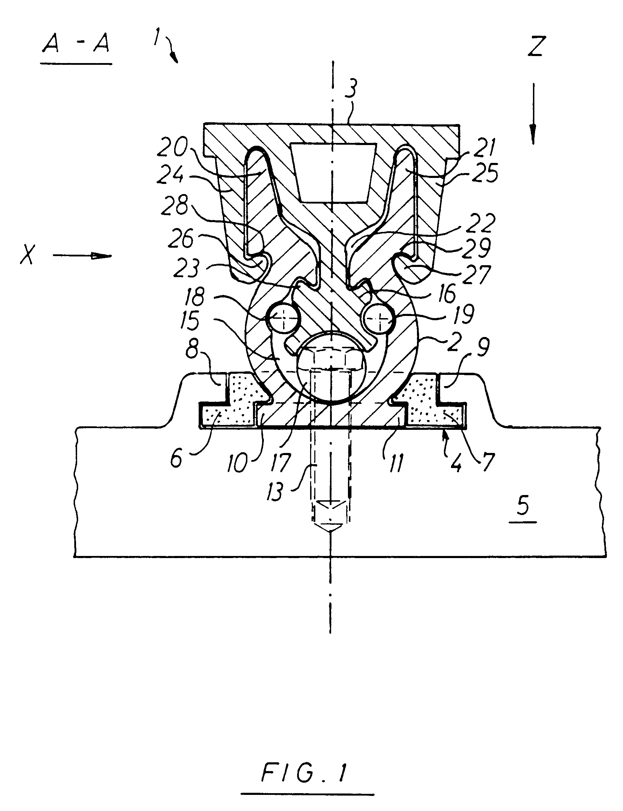

In Fig. 1 ist eine Vorrichtung zur Verbindung eines Fahrzeugsitzes mit Bodenteilen eines Fahrzeugs dargestellt, die im wesentlichen aus einer Außenschiene 2, einer Innenschiene 3, einem U-Profil 4 an einem Querträger 5 und aus Verbindungselementen 6 und 7 besteht.

Das U-Profil 4 ist nach oben offen und verläuft in Fahrzeuglängsrichtung, wobei zur Profilmitte abgebogene, obere Längsränder 8, 9 vorgesehen sind, so daß sich ein hinterschnittenes Profil bestimmter Öffnungsbreite ergibt.

Die Außenschiene hat an ihrer Unterseite eine flache Auflagefläche, an der seitlich abstehend Längsstege 11 vorgesehen sind. Die Außenschiene 2 ist mit diesen Längsstegen 10, 11 von oben her in den Öffnungsbereich des U-Profils 4 bzw. zwischen die Längsränder 8, 9 einsetzbar, so daß zwischen der Außenschiene 2 und dem U-Profil 4 seitlich jeweils ein im Querschnitt Z-förmiger Raum verbleibt.

In diesen Raum sind die entsprechend Z-förmig geformten Verbindungselemente 6, 7 formschlüssig von der Stirnseite her eingeschoben, wobei die Verbindungselemente 6, 7 einerseits die oberen Längsränder 8, 9 des U-Profils 4 untergreifen und andererseits die Längsstege 10, 11 der Außenschiene 2 übergreifen.

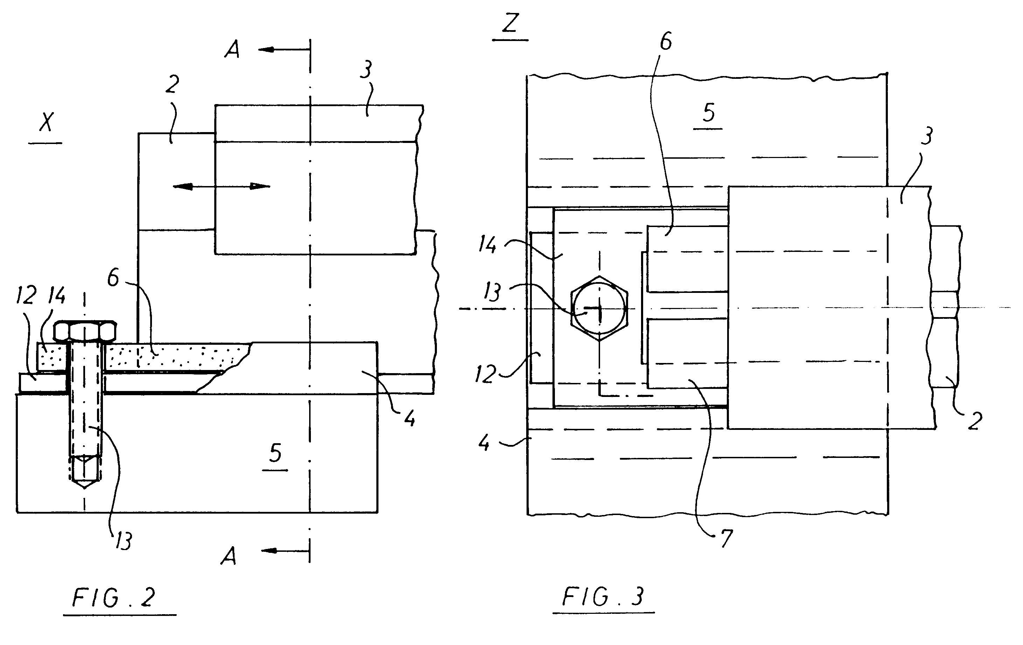

Aus den Fig. 2 und 3 ist zu ersehen, daß die Außenschiene 2 an den Endseiten mit einem bodenseiten Anschlußteil in Form einer vorstehenden Anschlußplatte 12 verlängert ist. Dort ist die Außenschiene 2 über eine Schraube 13 mit dem Querträger 5 verbunden.

Weiter ist aus den Fig. 2 und 3 zu ersehen, daß die Längsprofile der Verbindungselemente 6, 7 stirnseitig durch einen Quersteg 14 verbunden sind, so daß sich ein insgesamt U-förmiges Bauteil ergibt und dieser Quersteg 14 ebenfalls über die Schraube 13 mit dem Querträger 5 verbunden und damit in Axialrichtung gesichert ist.

Die Außenschiene 2 enthält einen rohrförmigen Längskanal 15, in den die Innenschiene 3 mit einem Formteil 16 eingreift. Das Formteil 16 und die Innenwände des Längskanals 15 sind so ausgeführt, daß sich in Längsrichtung drei Kugellagerführungen für eine untere Kugellagerung 17 und zwei jeweils seitliche, obere Kugellagerungen 18, 19 ergeben. Die untere Kugellagerung 17 liegt in einer Mittenebene mit Kugeln größeren Durchmessers und die zwei oberen Kugellagerungen 18, 19 liegen jeweils in einem oberen Seitenbereich mit Kugeln kleineren Durchmessers.

Die Wände des Längskanals 15 sind zu beiden Seiten nach oben zu Längsleisten 20, 21 verlängert, zwischen denen ein Spalt 22 zur Führung des Formteils 16 gebildet ist.

Der Durchmesser des Formteils 16 ist größer als die Spaltbreite des Spalts 22, wobei zudem über eine Verhakung 23 ein erster, profilförmiger Formschluß als Sicherung gegen ein vertikales Abheben geschaffen ist.

Die Längsleisten 20, 21 der Außenschiene greifen in ein entsprechend geformtes Profil der Innenschiene 3 ein und werden von Längsleisten 24, 25 der Innenschiene 3 übergriffen. Die Ränder dieser Längsleisten 24, 25 sind zu Führungsleisten 26, 27 abgebogen, die in entsprechende Längsnuten 28, 29 an den Längsleisten 20, 21 eingreifen, so daß ein zweiter Formschluß als Sicherung gegen ein vertikales Abheben geschaffen ist.

Die dargestellte Vorrichtung hat folgende Funktion: Die am (nicht dargestellten) Fahrzeugsitz befestigte Innenschiene 3 kann zusammen mit der eingesetzten Außenschiene 2 vormontiert werden. Zur Montage im Kraftfahrzeug wird der Fahrzeugsitz mit der Außenschiene 2 von oben her in das U-Profil 4 eingesetzt und anschließend die Verbindungselemente 6, 7 von der Stirnseite her eingeschoben. Nach der Befestigung der Außenschiene 2 mit der Schraube 13 am Querträger 5 jeweils an den Endseiten der beiden erforderlichen Schienenanordnungen ist der Fahrzeugsitz fertig montiert. Durch die Ausbildung der ineinandergreifenden Profile und Verbindungselemente 6 wird eine stabile Befestigung erreicht, die zur Einleitung hoher Kräfte geeignet ist.

## Patentansprüche

1. Vorrichtung zur Verbindung eines Fahrzeugsitzes mit Bodenteilen eines Fahrzeugs,
mit einer in Fahrzeuglängsrichtung verlaufenden Außenschiene (2) als erste Profilschiene, die mit den Bodenteilen (5) fest verbunden ist,
mit einer am Fahrzeugsitz befestigten Innenschiene (3) als zweite Profilschiene, wobei die Außenschiene (5) und Innenschiene (3) ein hinterschnittenes Profil bilden und die Außenschiene (2) mit der Innenschiene (3) über einen Formschluß verschiebbar verbunden ist,
wobei an den Bodenteilen (5) ein nach oben offenes, in Fahrzeuglängsrichtung verlaufendes, U-Profil (4) mit zur Profilmitte abgebogenen, oberen Längsrändern (8, 9) angebracht ist, so daß sich ein hinterschnittenes Profil bestimmter Öffnungsbreite ergibt, und
wobei an der Außenschiene (2) seitlich abstehende Längsstege (10, 11) vorgesehen sind und die Außenschiene (2) in Axialrichtung an den Bodenteilen (5) gesichert ist,
dadurch gekennzeichnet,
daß die Außenschiene (2) mit ihrer Breite in das U-Profil (4) von oben her einsetzbar ist,
daß bei in das U-Profil (4) eingesetzter Außenschiene (2) von der Stirnseite her in den dazwischen verbleibenden Raum Verbindungselemente (6, 7) formschlüssig einschiebbar sind, die einerseits die oberen Längsränder (8, 9) des U-Profils (4) untergreifen und andererseits die Längsstege (10, 11) der Außenschiene (2) übergreifen, so daß die Außenschiene (2) über die Verbindungselemente (6, 7) im U-Profil (4) gehalten ist.

2. Vorrichtung nach Anspruch 1, dadurch gekennzeichnet, daß die Bodenteile Querträger (5) sind.

3. Vorrichtung nach Anspruch 1 oder 2, dadurch gekennzeichnet, daß die Verbindungselemente (6, 7) aus zwei im Querschnitt Z-förmigen Längsprofilen bestehen.

4. Vorrichtung nach Anspruch 3, dadurch gekennzeichnet, daß die Verbindungselemente (6, 7) durch einen Quersteg (14) an der Stirnseite verbunden sind.

5. Vorrichtung nach einem der Ansprüche 1 bis 4, dadurch gekennzeichnet, daß die Außenschiene (2) an den Endseiten mit bodenseitigen Anschlußteilen (Anschlußplatte 12) versehen ist, über die die Außenschiene (2) mit einer Schraubverbindung (13) an den Bodenteilen (5) in Axialrichtung gesichert ist.

6. Vorrichtung nach Anspruch 5, dadurch gekennzeichnet, daß die Verbindungselemente (6, 7) über den Quersteg (14) mit derselben Schraubverbindung (13) in Axialrichtung gesichert sind.

7. Vorrichtung nach einem der Ansprüche 1 bis 6, dadurch gekennzeichnet, daß die Außenschiene (2) einen rohrförmigen Längskanal (15) enthält, in den die Innenschiene (3) mit einem Formteil (16) in der Weise eingreift, daß Führungsbahnen für eine Kugellagerung (17, 18, 19) gebildet sind.

8. Vorrichtung nach Anspruch 7, dadurch gekennzeichnet, daß im Querschnitt gesehen drei Kugellagerführungen (17, 18, 19) im Längskanal (15) enthalten sind, eine untere in einer Mittenebene mit Kugeln größeren Durchmessers und zwei im jeweils oberen Seitenbereich mit Kugeln kleineren Durchmessers.

9. Vorrichtung nach Anspruch 7 oder 8, dadurch gekennzeichnet, daß die Wände des Längskanals (15) an der Außenschiene (2) im Querschnitt gesehen zu beiden Seiten zu Längsleisten (20, 21) nach oben verlängert sind, zwischen denen ein Spalt (22) zur Führung des Formteils (16) der Innenschiene (3) gebildet ist,
daß der Durchmesser des Formteils (16) größer als die Spaltbreite ist und mit einer Verhakung (23) ein erster, profilförmiger Formschluß als Sicherung gegen ein vertikales Abheben geschaffen ist und
daß die Längsleisten (20, 21) der Außenschiene (2) in ein entsprechendes Profil an der Innenschiene (3) eingreifen und von Längsleisten (24, 25) der Innenschiene (3) übergriffen werden und diese mit zur Mitte hinweisenden Führungsleisten (26, 27) in Längsnuten (28, 29) an den Längsleisten (20, 21) der Außenschiene (2) eingreifen, so daß ein zweiter Formschluß als Sicherung gegen ein vertikales Abheben geschaffen ist.

10. Vorrichtung nach einem der Ansprüche 1 bis 9, dadurch gekennzeichnet, daß die Stirnseiten der Schienenanordnung mit Abdeckkappen abgedeckt sind, die einstückig mit den Verbindungselementen (6, 7) gebildet sind.

## Claims

1. System for connecting a vehicle seat to floor members of a vehicle,
comprising an outer rail (2), extending lengthways down the vehicle, forming a first profiled rail permanently joined to the floor members (5),
and comprising an inner rail (3), fastened to the vehicle seat, forming a second profiled rail, with the outer rail (2) and inner rail (3) constituting an undercut profile, and the outer rail (2) being displaceably joined to the inner rail (3) by way of a form closure,
an upwardly open U-profile (4) extending lengthways down the vehicle is mounted on the floor members (5) by upper longitudinal edges (8, 9) angled towards the middle of the profile, thereby producing an undercut profile with an opening of a given width, and
there being provided laterally proud longitudinal webs (10, 11) on the outer rail (2) and the outer rail (2) being secured in axial direction on the floor members (5),
characterised in that
the outer rail (2) is adapted to be inserted widthways into the U-profile (4) from above,
with the outer rail (2) inserted into the U-profile (4), connecting elements (6, 7) can be pushed in a form fit from the front into the space left therebetween, said elements (6, 7) engaging on the one hand beneath the upper longitudinal edges (8, 9) of the U-profile (4) and on the other hand over the longitudinal webs (10, 11) of the outer rail (2), with the result that the outer rail (2) is held in the U-profile (4) via the connecting elements (6, 7).

2. System according to claim 1, characterised in that the floor members are transverse chassis members (5).

3. System according to claim 1 or 2, characterised in that the connecting elements (6, 7) consist of two longitudinal profiles of Z-shaped cross-section.

4. System according to claim 3, characterised in that the connecting elements (6, 7) are joined at the front by a transverse web (14).

5. System according to any of claims 1 to 4, characterised in that the outer rail (2) is provided on the end faces with floor-side connection members (joining plate 12), via which the outer rail (2) is secured in axial direction to the floor members (15) by a bolted connection (13).

6. System according to claim 5, characterised in that the connecting elements (6, 7) are secured in axial direction by the same bolted connection (13) via the transverse web (14).

7. System according to any of claims 1 to 6, characterised in that the outer rail (2) contains a tubular lengthways duct (15) into which the inner rail (3) engages with a formed part (16) in such a manner that guideways for ball bearings (17, 18, 19) are constituted.

8. System according to claim 7, characterised in that seen in cross-section the lengthways duct (15) contains three ball-bearing guides (17, 18, 19), a lower one in a median plane with larger diameter balls and two with smaller diameter balls, one in each upper side region.

9. System according to claim 7 or 8, characterised in that seen in cross-section the walls of the lengthways duct (15) on the outer rail (2) are lengthened upwards on both sides to form lengthways ledges (20, 21) between which a gap (22) is constituted for guiding the formed part (16) of the inner rail (3),
that the diameter of the formed part (16) is larger than the width of the gap and by a hooking together (23) there is created a first, profile-shaped form fit as security against vertical lifting, and
that the lengthways ledges (20, 21) of the outer rail (2) engage in a corresponding profile on the inner rail (3) and are overlapped by lengthways ledges (24, 25) of the inner rail (3), and said ledges (24, 25) engage with centrally facing guide ledges (26, 27) in longitudinal grooves (28, 29) on the lengthways ledges (20, 21) of the outer rail (2), with the result that a second form fit is created as security against vertical lifting.

10. System according to any of claims 1 to 9, characterised in that the front end faces of the slide assembly are masked by end caps of integral construction with the connecting elements (6, 7).

## Revendications

1. Système de fixation d'un siège de véhicule a des éléments du plancher du véhicule, comprenant
un rail extérieur (2) qui s'étend dans la direction longitudinale du véhicule, en tant que premier rail profilé, et qui est fixé rigidement aux éléments (5) du plancher,
un rail intérieur (3) fixé au siège du véhicule en tant que second rail profilé, le rail extérieur (2) et le rail intérieur (3) formant un profit à contredépouille et le rail extérieur (2) étant relié au rail intérieur (3) au moyen d'un assemblage par emboîtement, de manière à permettre un mouvement coulissant,
un profit (4) en U ouvert vers le haut, qui s'étend dans la direction longitudinale du véhicule et qui présente des bords longitudinaux supérieurs (8, 9) recourbés vers le milieu du profil, étant formé sur les éléments (5) du plancher de sorte qu'il en résulte un profil en contre-dépouille ayant une largeur d'ouverture déterminée, et
des nervures longitudinales (10, 11) en saillie latérale étant prévues sur le rail extérieur (2) et le rail extérieur (2) étant assujetti en direction axiale sur les éléments (5) du plancher,
caractérisé en ce que
le rail extérieur (2) peut être inséré de haut en bas dans le profil (4) en U par sa largeur,
après insertion du rail extérieur (2) dans le profil (4) en U, des éléments de jonction (6,7) peuvent être glissés par emboîtement, dans l'espace qui reste entre ceux-ci et à partir de l'extrémité, éléments de jonction (6, 7) qui s'engagent d'une part au-dessous des bords longitudinaux supérieurs (8, 9) du profil (4) en U et, d'autre part, au-dessus des nervures longitudinales (10, 11) du rail extérieur (2), de sorte que le rail extérieur (2) est maintenu dans le profil (4) en U au moyen des éléments de jonction (6, 7).

2. Système selon la revendication 1, caractérisé en ce que les éléments du plancher sont des traverses (5).

3. Système selon la revendication 1 ou 2, caractérisé en ce que les éléments de jonction (6, 7) sont constitués par deux profilés longitudinaux en forme de Z en coupe transversale.

4. Système selon la revendication 3, caractérisé en ce que les éléments de jonction (6, 7) sont reliés par une barrette transversale (14) à leur extrémité.

5. Système selon l'une quelconque des revendications 1 à 4, caractérisé en ce que te rail extérieur (2) est muni, à ses extrémités, d'éléments d'assemblage du côté du plancher (plaque d'assemplage 12), au moyen desquels le rail extérieur (2) peut être assujetti en direction axiale sur les éléments (5) du plancher par assemblage par vis (13)

6. Système selon la revendication 5, caractérisé en ce que les éléments de jonction (6, 7) sont assujettis en direction axiale au moyen de leur barrette transversale (14), par le même assemblage par vis (13).

7. Système selon l'une quelconque des revendications 1 à 6, caractérisé en ce que le rail extérieur (2) contient un canal longitudinal tubulaire (15) dans lequel le rail intérieur (3) s'engage par une partie (16) profilée de telle sorte que des glissières de guidage sont formées pour un montage sur roulements à billes (17, 18, 19).

8. Système selon la revendication 7, caractérisé en ce que le canal longitudinal (15), vu en coupe transversale, contient trois guides à roulement à billes (17, 18, 19), à savoir un guide inférieur dans un plan médian avec des billes de grand diamètre et deux guides dans les deux régions latérales supérieures avec des billes de plus petit diamètre.

9. Système selon la revendication 7 ou 8, caractérisé en ce que, vues en coupe transversale, les parois du canal longitudinal (15) dans le rail extérieur (2) sont prolongées vers le haut, des deux côtés, par des nervures longitudinales (20, 21) entre lesquelles est formée une fente (22) pour le guidage de la partie profilée (16) du rail intérieur (3),
en ce que le diamètre de la partie profilée (16) est plus grand que la largeur de la fente et il est créé, par une aile d'accrochage (23), un premier assemblage par emboîtement profilé, servant à l'assujettissement contre une extraction verticale, et
en ce que les nervures longitudinales (20, 21) du rail extérieur (2) s'engagent dans un profil correspondant du rail intérieur (3) et sont saisies pardessus par des nervures longitudinales (24, 25) du rail intérieur (3), et celles-ci s'engagent, par des nervures de guidage (26, 27), dirigées vers le milieu, dans des rainures longitudinales (28, 29) formées dans les nervures longitudinales (20, 21), de sorte qu'il est créé un second assemblage par emboîtement, servant à l'assujettissement contre une extraction verticale.

10. Système selon l'une quelconque des revendications 1 à 9, caractérisé en ce que les faces d'extrémité du système de rails sont recouvertes par des coiffes de resouvrement qui sont formées d'une seule pièce avec les éléments de jonction (6, 7).
